# FASCICULE DE BREVET EUROPEEN

(11) **EP 4 337 485 B1**
(45) Date de publication et mention de la délivrance du brevet: **05.03.2025**
(21) Numéro de dépôt: 22717219.4
(22) Date de dépôt: 23.03.2022
(51) Int. Cl.: B60K 11/08, B62D 25/08, B62D 21/15

(54) **DISPOSITIF DE RÉGULATION PILOTÉE DU FLUX D'AIR ENTRANT DE REFROIDISSEMENT D'UN VÉHICULE AUTOMOBILE**
VORRICHTUNG ZUR GEREGELTEN REGELUNG DES ZULUFTSTROMS EINER KRAFTFAHRZEUG-KÜHLLUFTANLAGE
DEVICE FOR THE CONTROLLED REGULATION OF THE INCOMING COOLING AIR FLOW OF A MOTOR VEHICLE

(30) Priorité: 12.05.2021 FR 2105022
(43) Date de publication de la demande: 20.03.2024
(73) Titulaire: Stellantis Auto SAS, 78300 Poissy (FR)
(72) Inventeur: VERDIER, François, 92160 ANTONY (FR); RIVIERE, Claude, 78460 CHEVREUSE (FR); LAMOURIC, Stéphane, 78280 GUYANCOURT (FR)
(74) Mandataire: BCIP
(86) Numéro de dépôt international: PCT/FR2022/050531
(87) Numéro de publication internationale: WO 2022/238629

(56) Documents cités:
- EP-A1- 3 002 145
- EP-B1- 2 233 343
- WO-A1-2017/036869

## Description

La présente invention revendique la priorité de la demande française 2105022 déposée le 12.05.2021.

### [Domaine technique]

La présente invention concerne d'une manière générale le refroidissement des échangeurs de chaleur d'un véhicule automobile. Elle vise en particulier un dispositif de régulation pilotée du flux d'air entrant de refroidissement d'un tel véhicule automobile.

### [Technique antérieure]

La régulation du flux d'air de refroidissement des échangeurs de chaleur d'un véhicule automobile est généralement assurée par deux entrées d'air principales dites voie haute et voie basse séparées par la poutre de pare-chocs avant de ce véhicule.

Ainsi, lorsque le véhicule se déplace, une quantité d'air plus ou moins frais est reçue à l'intérieur du compartiment moteur par ces échangeurs de chaleur afin de refroidir certains organes implantés sous le capot du véhicule tels que le moteur et/ou le système de climatisation de l'habitacle.

La quantité d'air pénétrant dans ces conditions dépend directement de la vitesse du véhicule et des dimensions des ajours d'entrée d'air de la calandre ainsi qu'éventuellement de la puissance du ou des ventilateurs d'entraînement d'air habituellement logé dans le compartiment moteur, lorsque ces derniers sont en fonctionnement.

Cependant, ces ajours sont de dimensions fixes de sorte que les débits et températures d'air de refroidissement ne sont pas maîtrisables car ils sont directement liés à la vitesse de déplacement du véhicule et à la température de l'air extérieur. Par conséquent, les organes du compartiment moteur du véhicule situés sous le capot de celui-ci peuvent être excessivement refroidis dans certaines conditions, notamment en hiver, lorsque la température extérieure est faible.

En outre, cet air entrant dans le véhicule via la calandre a pour effet de dégrader le coefficient de traînée aérodynamique SCx du véhicule (ce coefficient correspondant au coefficient de traînée (Cx) multiplié par une surface (S) de référence) et d'augmenter en conséquence les émissions de CO2 du véhicule.

Il est également connu, du document EP 2 233 343 B1, d'intercaler entre la poutre de pare-choc avant et les échangeurs de chaleur d'un véhicule automobile, un dispositif de régulation pilotée du flux d'air entrant de refroidissement comportant deux modules de régulation implantés respectivement au-dessus et au-dessous de ladite poutre en regard des entrées d'air voie haute et voie basse du véhicule.

Chacun de ces modules comprend un casier support délimitant deux cases latérales séparées par une case centrale, une pluralité de volets agencés dans les cases latérales dudit cadre et montés pivotant autour d'axes transversaux parallèles entre une position d'obturation et une position d'ouverture, ainsi qu'un mécanisme de commande implanté au niveau de la case centrale et articulé aux volets.

Le dispositif comporte également une tringle de connexion reliant le mécanisme de commande dudit premier module à celui du second module, ainsi qu'un actionneur logé dans la case centrale dudit premier module, cet actionneur étant apte à entraîner le pivotement de l'ensemble des volets desdits modules via lesdits mécanismes de commande et ladite tringle de connexion.

En cas de choc frontal à faible vitesse (environ 10 km/h) parfois dénommé sous l'appellation « choc réparabilité », la poutre de pare-choc avant du véhicule se déforme et peut venir impacter la tringle de connexion d'un tel dispositif qui entraîne alors les éléments des mécanismes de commande et l'actionneur en direction des échangeurs de chaleur.

Ces derniers peuvent ainsi subir des dégâts considérables entraînant une augmentation importante des coûts de remise en état du véhicule voire carrément son immobilisation en cas de fuites de liquide de refroidissement de l'échangeur refroidissant le moteur.

### [Exposé de l'invention]

La présente invention vise donc à améliorer la situation.

Elle propose à cet effet un dispositif de régulation pilotée du flux d'air entrant de refroidissement pour véhicule automobile, destiné à être intercalé entre la poutre de pare-choc avant et au moins un échangeur de chaleur dudit véhicule, ledit dispositif comportant un premier et un second modules de régulation prévus pour être agencés respectivement au-dessus et au-dessous de ladite poutre en regard des entrées d'air voie haute et voie basse du véhicule, chaque dit module comprenant un casier support délimitant deux cases latérales séparées par une case centrale, une pluralité de volets agencés dans lesdites cases latérales et montés pivotant autour d'axes transversaux parallèles entre une position d'obturation et une position d'ouverture, ainsi qu'un mécanisme de commande implanté au niveau de ladite case centrale et articulé auxdits volets, ledit dispositif comportant également une tringle de connexion reliant les mécanismes de commande desdits modules ainsi qu'un actionneur logé dans ladite case centrale d'un dit module, ledit actionneur étant apte à entraîner le pivotement de l'ensemble des volets desdits modules via lesdits mécanismes de commande et ladite tringle de connexion ;
caractérisé en ce que ladite tringle de connexion présente au moins une zone d'affaiblissement frangible de moindre résistance configurée pour rompre sous une contrainte longitudinale de cisaillement prédéterminée.

L'adjonction d'au moins une telle zone d'affaiblissement frangible sur la tringle de connexion permet de provoquer, en cas de choc frontal à faible vitesse entraînant une déformation de la poutre de pare-chocs avant, la cassure de cette tringle de connexion, de sorte à éviter qu'elle n'entraîne vers l'arrière et en direction du au moins dit échangeur certains éléments des mécanismes de commande. L'invention permet ainsi de réduire sensiblement les coûts de réparation du véhicule suite à un tel choc.

Selon des caractéristiques préférées dudit dispositif selon l'invention :
- chaque au moins dite zone d'affaiblissement frangible se présente sous la forme d'une ligne de striction transversale constituée par une rainure d'amincissement réalisée sur la face avant de ladite tringle de connexion ;
- ladite tringle de connexion comporte une tête articulée au mécanisme de commande du premier module de régulation, un pied articulé au mécanisme de commande du second module de régulation, et un jambage s'étendant verticalement entre ladite tête et ledit pied ;
- ledit jambage comprend un tronçon supérieur s'étendant en biais vers le bas et vers l'arrière depuis ladite tête, ainsi qu'un tronçon inférieur s'étendant verticalement vers le bas dans le prolongement dudit tronçon supérieur jusqu'audit pied ;
- ladite tringle comprend une première dite zone d'affaiblissement frangible agencée sur ledit tronçon supérieur en biais du jambage ;
- ladite première dite zone d'affaiblissement frangible est située en hauteur entre l'extrémité inférieure dudit premier module de régulation et l'extrémité supérieure de ladite poutre de pare-chocs ;
- ladite tringle comprend une seconde dite zone d'affaiblissement frangible agencée sur ledit tronçon inférieur vertical du jambage ;
- ladite seconde dite zone d'affaiblissement frangible est située en hauteur entre l'extrémité supérieure dudit second module de régulation et l'extrémité inférieure de ladite poutre de pare-chocs ; et/ou
- ladite tringle de connexion est venue de moulage d'une seule pièce à partir d'un matériau thermoplastique .

L'invention vise également sous un second aspect, un véhicule automobile comportant une poutre de pare-choc avant, au moins un échangeur de chaleur, et un tel dispositif de régulation pilotée du flux d'air entrant de refroidissement intercalé entre ladite poutre de pare-choc avant et ledit au moins un échangeur de chaleur.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue de coupe en perspective prise selon un plan longitudinal vertical de la partie avant du compartiment moteur d'un véhicule automobile comportant un dispositif de régulation pilotée du flux d'air entrant de refroidissement selon l'invention ;
[Fig 2] est une vue en perspective du seul dispositif de régulation pilotée du flux d'air entrant de refroidissement selon l'invention ;
[Fig 3] représente un agrandissement du détail III de la figure 2 ; et
[Fig 4] est un agrandissement du détail IV de la figure 2.

### [Description détaillée]

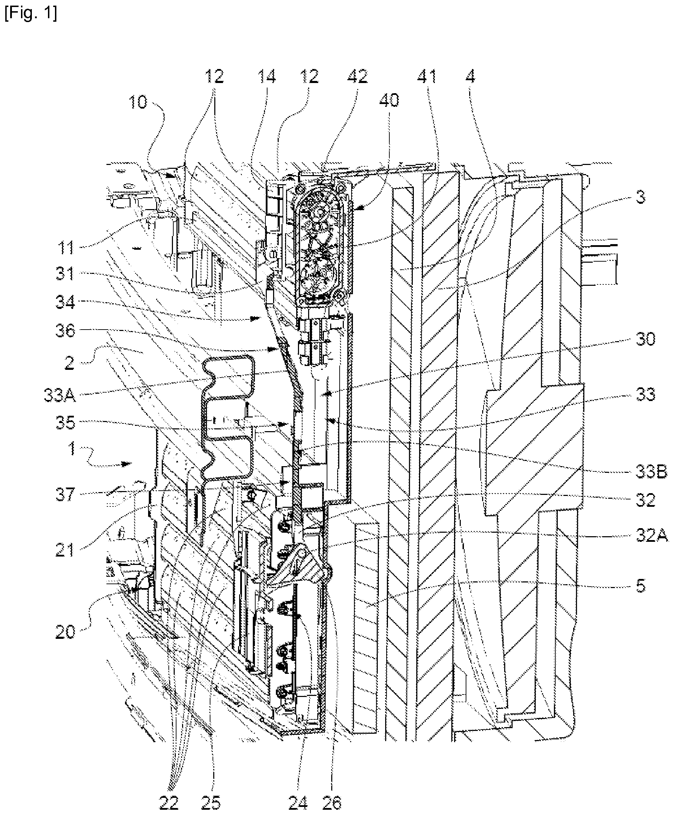

La figure 1 représente la partie avant du compartiment moteur d'un véhicule automobile comportant un dispositif de régulation pilotée du flux d'air entrant de refroidissement 1 selon l'invention intercalé longitudinalement entre la poutre de pare-chocs avant 2 et les divers échangeurs de chaleur 3, 4, 5 que comporte ce véhicule (à savoir et d'arrière en avant, le radiateur 3 du circuit de refroidissement du moteur thermique, le condenseur 4 du circuit du système de climatisation, et enfin le radiateur 5 de refroidissement de la batterie du moteur électrique d'hybridation).

Dans la description qui va suivre et par convention, les termes « avant », « arrière », « inférieur », « supérieur », « longitudinal » et « transversal » seront définis par rapport à la position de montage de ce dispositif 1 sur le véhicule.

Les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

Le dispositif de régulation pilotée du flux d'air entrant de refroidissement 1 comporte deux modules de régulation 10, 20 implantés respectivement au dessus et au dessous de la poutre de pare-chocs avant 2, en regard des entrées d'air voie haute et voie basse du véhicule.

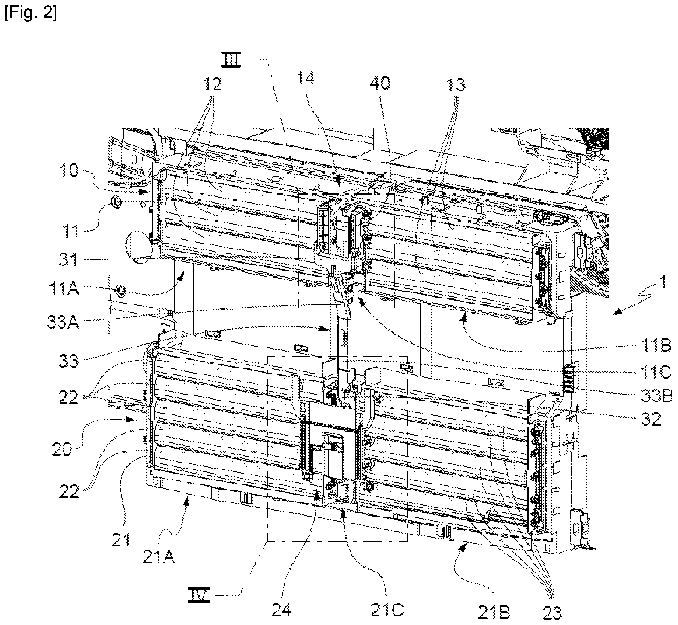

Tel qu'illustré sur la figure 2, le premier module de régulation 10 comprend un casier support 11 de forme rectangulaire délimitant deux cases latérales de largeurs identiques 11A, 11B, s'étendant symétriquement de part et d'autre d'une case centrale 11C de plus faible largeur.

Ce premier module de régulation 10 comprend également :
- trois volets 12 agencés dans la case latérale 11A du casier support 11 les uns au-dessus des autres et montés pivotants autour de leurs axes orientés transversalement, entre une position de fermeture sensiblement verticale illustrée par les figures 1 et 2 et une position d'ouverture sensiblement horizontale non représentée ; et
- trois volets 13 agencés dans la case latérales 11B du casier support 11 les uns au-dessus des autres de manière symétrique par rapport aux volets 12 et montés pivotants autour de leurs axes orientés transversalement, entre une position de fermeture sensiblement verticale illustrée par la figure 2 et une position d'ouverture sensiblement horizontale non représentée.

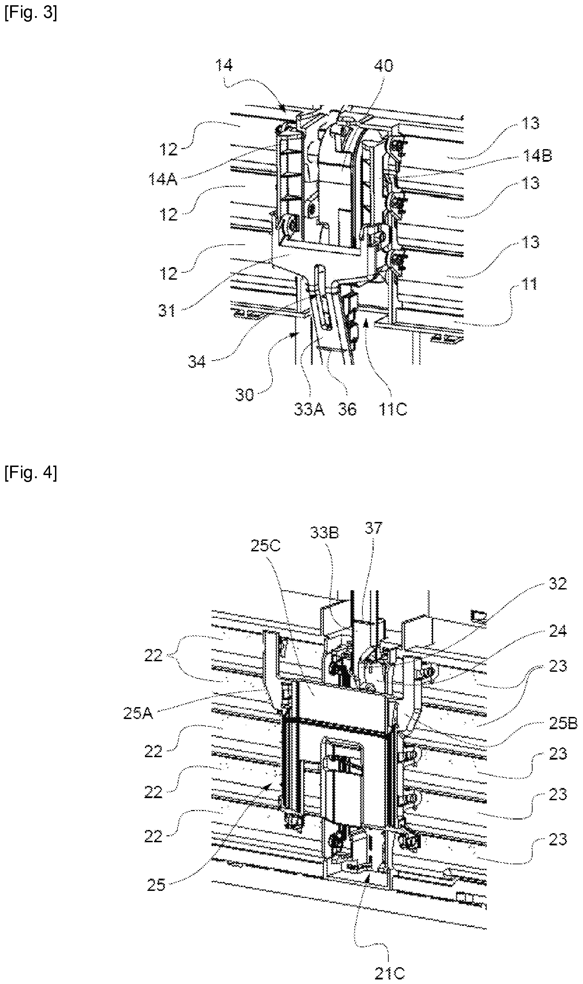

Comme illustré sur la figure 3, le premier module de régulation 10 comporte en outre un premier mécanisme de commande 14 implanté au niveau de la case centrale 11C, au devant des extrémités internes des volets 12, 13.

Ce premier mécanisme de commande 14 comporte une bielle 14A articulée aux trois volets 12 selon des axes transversaux décalés vis-à-vis de leurs axes de pivotement, de sorte à les rendre solidaire en rotation les uns des autres, ainsi qu'une bielle 14B articulée aux trois volets 13 selon des axes transversaux décalés vis-à-vis de leurs axes de pivotement, de sorte à les rendre solidaire en rotation les uns des autres.

En référence de nouveau à la figure 2, le second module de régulation 20 comprend un casier support 21 de forme rectangulaire délimitant deux cases latérales de largeurs identiques 21A, 21B, s'étendant symétriquement de part et d'autre d'une case centrale 21C de plus faible largeur.

Ce second module de régulation 20 comprend également :
- cinq volets 22 agencés dans la case latérale 21A du casier support 21 les uns au-dessus des autres et montés pivotants autour de leurs axes orientés transversalement, entre une position de fermeture sensiblement verticale illustrée par les figures 1 et 2 et une position d'ouverture sensiblement horizontale non représentée ; et
- cinq volets 23 agencés dans la case latérales 21B du casier support 21 les uns au-dessus des autres de manière symétrique par rapport aux volets 22 et montés pivotants autour de leurs axes orientés transversalement, entre une position de fermeture sensiblement verticale illustrée par la figure 2 et une position d'ouverture sensiblement horizontale non représentée.

Comme illustré sur la figure 4, ce second module de régulation 20 comporte en outre un second mécanisme de commande 24 implanté au niveau de la case centrale 21C.

Ce second mécanisme de commande 24 comprend un organe de liaison 25 implanté au devant des extrémités internes des volets 22, 23, ainsi qu'une platine d'articulation 26 logée dans la case centrale 21C et visible sur la figure1.

L'organe de liaison 25 se compose :
- d'une bielle 25A articulée aux cinq volets 22 selon des axes transversaux décalés vis-à-vis de leurs axes de pivotement, de sorte à les rendre solidaire en rotation les uns des autres ;
- d'une bielle 25B articulée aux cinq volets 23 selon des axes transversaux décalés vis-à-vis de leurs axes de pivotement, de sorte à les rendre solidaire en rotation les uns des autres ; et
- d'une traverse 25C reliant rigidement ces deux bielles 25A, 25B de sorte à ce que l'ensemble des volets 22, 23 soient solidaires en rotation.

S'étendant suivant un plan longitudinal vertical et présent une forme en triangle, la platine d'articulation 26 est articulée à pivotement par son extrémité avant et selon un axe transversal sur la traverse 25C de l'organe de liaison 25. Elle est également articulée à pivotement par son extrémité arrière et selon un axe transversal sur le casier support 11.

Tel qu'illustré sur les figures 1 et 2, le dispositif de régulation pilotée 1 comporte également une tringle de connexion 30 en forme de T reliant l'un à l'autre les premier et second mécanismes de commande 14, 24.

Venue avantageusement de moulage d'une seule pièce à partir d'un matériau thermoplastique, la tringle 30 se compose d'une tête 31 articulée au premier mécanisme de commande 14, d'un pied 32 articulé au second mécanisme de commande 24, et d'un jambage 33 s'étendant verticalement entre la tête 31 et le pied 32.

La tête 31 s'étend transversalement au devant des deux bielles 14A, 14B du premier mécanisme de commande 14 et ses deux extrémités latérales sont montées articulées à pivotement selon un même axe transversal sur ces deux bielles 14A, 14B, de sorte à ce que l'ensemble des volets 12, 13 du premier module de régulation 10 soient solidaires en rotation (voir figure 3).

Le pied 32 se présente sous la forme d'un doigt s'étendant dans le prolongement du jambage 33 et portant à son extrémité libre un pion transversal 32A monté articulé à coulissement et à pivotement au travers d'une lumière en arc de cercle 26A ménagée dans la platine 26 (voir figure 4).

Le jambage 33 se présente sous la forme d'une languette comprenant un tronçon supérieur 33A s'étendant en biais vers le bas et vers l'arrière depuis la tête 31, ainsi qu'un tronçon inférieur 33B s'étendant verticalement vers le bas dans le prolongement du tronçon supérieur 33A jusqu'au pied 32.

Afin de réduire sa masse, cette tringle de connexion 30 présente un premier évidement oblong 34 ménagé dans la portion supérieure du tronçon en biais 33A et se prolongeant au niveau de la tête 31, ainsi qu'un second évidement oblong 35 ménagé dans le tronçon 33B du jambage 33.

Le dispositif de régulation pilotée 1 comporte enfin un actionneur 40 logé dans la dans la case centrale 11C du premier module de régulation 10.

En référence à la figure 1, cet actionneur 40 comprend un boîtier 41 logeant un moteur électrique (non représenté et par exemple de type pas à pas ou à courant continu) doté d'un arbre rotatif creux 42 dans lequel est insérée par correspondance de forme l'extrémité interne d'un volet 12 du premier module de régulation 10 traversant ledit boîtier 41, de sorte que ce volet 12 soit solidaire en rotation avec cet arbre 42.

Les volets 12, 13 du premier module de régulation 10 étant solidaires en rotation par l'intermédiaire du premier mécanisme de commande 14, on comprend que la rotation de l'arbre 42 dans un sens ou dans l'autre entraîne la rotation de ces volets 12, 13 d'une position d'ouverture vers une position de fermeture ou inversement.

Du fait de la présence de la tringle de connexion 40 reliant les premier et second mécanismes de commande 14, 24, la rotation de l'arbre 42 dans un sens ou dans l'autre va entraîner également la rotation des volets 22, 23 du second module de régulation 20 d'une position d'ouverture vers une position de fermeture ou inversement.

Par ailleurs, le jambage 33 de la tringle de connexion 30 présente deux zones d'affaiblissement frangibles de moindre résistance 36, 37 configurées pour rompre sous une contrainte longitudinale de cisaillement prédéterminée.

Tel qu'illustré sur la figure 3, la première zone d'affaiblissement frangible 36 est agencée sur le tronçon supérieur en biais 33A de ce jambage 33, avantageusement à une hauteur située entre l'extrémité inférieure du premier module de régulation 10 et l'extrémité supérieure de la poutre de pare-chocs avant 2.

Tel qu'illustré sur la figure 4, la seconde zone d'affaiblissement frangible 37 est quant à elle agencée sur le tronçon inférieur vertical 33B de ce jambage 33, avantageusement à une hauteur située entre l'extrémité supérieure du second module de régulation 20 et l'extrémité inférieure de la poutre de pare-chocs avant 2.

Ces zones d'affaiblissement frangibles se présentent sous la forme de lignes de striction transversales 36, 37 constituées chacune par une rainure d'amincissement réalisée sur la face avant de la tringle 30.

La résistance à la contrainte de cisaillement de ces lignes de striction 36, 37 peut être ajustée en faisant varier leur épaisseur qui sera par exemple comprise entre 1 et 1,5 mm pour une épaisseur générale de la tringle 30 comprise entre 2 et 2.5 mm.

En cas de choc frontal du véhicule à faible vitesse entraînant une déformation de la poutre de pare-chocs avant 2, cette dernière vient impacter la tringle de connexion 30 dont les zones d'affaiblissement frangibles 36, 37 se rompent successivement l'une après l'autre, ce qui permet d'éviter que cette tringle 30 n'entraîne vers l'arrière et en direction des échangeurs 3, 4, 5 les bielles 14A, 14B du premier mécanisme de commande 14 ainsi que la platine d'articulation 26 du second mécanisme de commande 24.

Selon des variantes de réalisation non représentées, la tringle 30 peut être dépourvue de la seconde zone d'affaiblissement frangible 37.

Selon d'autres variantes de réalisation non représentées, la ou les zones d'affaiblissement frangibles peuvent être conformées différemment. Celles-ci peuvent par exemple être pourvues de trous d'amorce répartis à intervalle régulier sur leur longueur de sorte à faciliter leur rupture.

Selon encore d'autres variantes de réalisation non représentées, le mécanisme de commande de chaque module de régulation peut varier, de même que le nombre de volets qu'il comporte.

## Revendications

1. Dispositif de régulation pilotée du flux d'air entrant de refroidissement (1) pour véhicule automobile, destiné à être intercalé entre la poutre de pare-choc avant (2) et au moins un échangeur de chaleur (3, 4, 5) dudit véhicule, ledit dispositif (1) comportant un premier et un second modules de régulation (10, 20) prévus pour être agencés respectivement au-dessus et au-dessous de ladite poutre (2) en regard des entrées d'air voie haute et voie basse du véhicule, chaque dit module (10, 20) comprenant un casier support (11, 21) délimitant deux cases latérales (11A, 11B, 21A, 21B) séparées par une case centrale (11C, 21C), une pluralité de volets (12, 13, 22, 23) agencés dans lesdites cases latérales (11A, 11B, 21A, 21B) et montés pivotant autour d'axes transversaux parallèles entre une position d'obturation et une position d'ouverture, ainsi qu'un mécanisme de commande (14, 24) implanté au niveau de ladite case centrale (11C, 21C) et articulé auxdits volets (12, 13, 22, 23), ledit dispositif (1) comportant également une tringle de connexion (30) reliant les mécanismes de commande (14, 24) desdits modules (10, 20) ainsi qu'un actionneur (40) logé dans ladite case centrale (11C) d'un dit module (11), ledit actionneur (40) étant apte à entraîner le pivotement de l'ensemble des volets (12, 13, 22, 23) desdits modules (10, 20) via lesdits mécanismes de commande (14, 24) et ladite tringle de connexion (30) ; **caractérisé en ce que** ladite tringle de connexion (30) présente au moins une zone d'affaiblissement frangible de moindre résistance (36, 37) configurée pour rompre sous une contrainte longitudinale de cisaillement prédéterminée.

2. Dispositif selon la revendication 1, **caractérisé en ce que** chaque au moins dite zone d'affaiblissement frangible se présente sous la forme d'une ligne de striction transversale (36, 37) constituée par une rainure d'amincissement réalisée sur la face avant de ladite tringle de connexion (30).

3. Dispositif selon l'une des revendications 1 ou 2, **caractérisé en ce que** ladite tringle de connexion (30) comporte une tête (31) articulée au mécanisme de commande (14) du premier module de régulation (10), un pied (32) articulé au mécanisme de commande (24) du second module de régulation (20), et un jambage (33) s'étendant verticalement entre ladite tête (31) et ledit pied (32).

4. Dispositif selon la revendication 3, **caractérisé en ce que** ledit jambage (33) comprend un tronçon supérieur (33A) s'étendant en biais vers le bas et vers l'arrière depuis ladite tête (31), ainsi qu'un tronçon inférieur (33B) s'étendant verticalement vers le bas dans le prolongement dudit tronçon supérieur (33A) jusqu'audit pied (32).

5. Dispositif selon la revendication 4, **caractérisé en ce que** ladite tringle (30) comprend une première dite zone d'affaiblissement frangible (36) agencée sur ledit tronçon supérieur en biais (33A) du jambage (33).

6. Dispositif selon la revendication 5, **caractérisé en ce que** ladite première dite zone d'affaiblissement frangible (36) est située en hauteur entre l'extrémité inférieure dudit premier module de régulation (10) et l'extrémité supérieure de ladite poutre de pare-chocs (2).

7. Dispositif selon l'une des revendications 5 ou 6, **caractérisé en ce que** ladite tringle (30) comprend une seconde dite zone d'affaiblissement frangible (37) agencée sur ledit tronçon inférieur vertical (33B) du jambage (33).

8. Dispositif selon la revendication 7, **caractérisé en ce que** ladite seconde dite zone d'affaiblissement frangible (37) est située en hauteur entre l'extrémité supérieure dudit second module de régulation (20) et l'extrémité inférieure de ladite poutre de pare-chocs (2).

9. Dispositif selon l'une des revendications 1 à 8, **caractérisé en ce que** ladite tringle de connexion (30) est venue de moulage d'une seule pièce à partir d'un matériau thermoplastique.

10. Véhicule automobile comportant une poutre de pare-choc avant (2), au moins un échangeur de chaleur (3, 4, 5), et un dispositif de régulation pilotée du flux d'air entrant de refroidissement (1) intercalé entre ladite poutre de pare-choc avant (2) et ledit au moins un échangeur de chaleur (3, 4, 5) ; **caractérisé en ce que** ledit dispositif de régulation pilotée du flux d'air entrant de refroidissement (1) est conforme à l'une des revendications 1 à 9.

## Patentansprüche

1. Steuerbare Steuervorrichtung für den Kühleingangsluftstrom (1) für ein Kraftfahrzeug, die zwischen dem vorderen Stoßfängerbalken (2) und mindestens einem Wärmetauscher (3, 4, 5) des Fahrzeugs angeordnet ist, wobei die Vorrichtung (1) ein erstes und ein zweites Steuermodul (10, 20) aufweist, die jeweils oberhalb und unterhalb des Balkens (2) gegenüber dem oberen und unteren Lufteinlass des Fahrzeugs angeordnet sind, wobei jedes Modul (10, 20) ein Traggestell (11, 21) aufweist, das zwei seitliche Kästen begrenzt (11A, 11B, 21A, 21B), die durch ein zentrales Feld (11C, 21C) getrennt sind, eine Vielzahl von Klappen (12, 13, 22, 23), die in den seitlichen Feldern (11A, 11B, 21A, 21B) angeordnet sind und um parallele Querachsen zwischen einer Verschlussposition und einer Öffnungsposition schwenkbar gelagert sind, sowie einen Steuermechanismus (14, 24), der an dem zentralen Feld (11C, 21C) angebracht ist und mit den Klappen (12, 13, 22, 23) gelenkig verbunden ist, wobei die Vorrichtung (1) außerdem eine Verbindungsstange (30) aufweist, die die Betätigungsmechanismen (14, 24) der Module (10, 20) verbindet, sowie ein Stellglied (40), das in dem mittleren Gehäuse (11C) eines Moduls (11) untergebracht ist, wobei das Stellglied (40) in der Lage ist, das Schwenken aller Klappen (12, 13, 22, 23) der Module (10) zu bewirken, 20) über die Steuermechanismen (14, 24) und die Verbindungsstange (30);
das Merkmal ist, dass die Verbindungsstange (30) wenigstens eine zerbrechliche Schwächungszone geringeren Widerstands (36, 37) aufweist, die so konfiguriert ist, dass sie unter einer vorbestimmten Längsscherspannung bricht.

2. Vorrichtung nach Anspruch 1, **dadurch gekennzeichnet, dass** jeder wenigstens genannte zerbrechliche Schwächungsbereich die Form einer Querstreckungslinie (36, 37) hat, die aus einer Verdünnungsnut besteht, die auf der Vorderseite der Verbindungsstange (30) ausgebildet ist.

3. Vorrichtung nach einem der Ansprüche 1 oder 2, **dadurch gekennzeichnet, dass** die Verbindungsstange (30) einen Kopf (31), der an dem Steuermechanismus (14) des ersten Regelungsmoduls (10) angelenkt ist, einen Fuß (32), der an dem Steuermechanismus (24) des zweiten Regelungsmoduls (20) angelenkt ist, und einen Fuß (33) aufweist, der sich vertikal zwischen dem Kopf (31) und dem Fuß (32) erstreckt.

4. Vorrichtung nach Anspruch 3, **dadurch gekennzeichnet, dass** der Schenkel (33) einen oberen Abschnitt (33A), der sich schräg nach unten und nach hinten von dem Kopf (31) erstreckt, sowie einen unteren Abschnitt (33B) aufweist, der sich vertikal nach unten in der Verlängerung des oberen Abschnitts (33A) zu dem Fuß (32) erstreckt.

5. Vorrichtung nach Anspruch 4, **dadurch gekennzeichnet, dass** die Stange (30) eine erste zerbrechliche Schwächungszone (36) aufweist, die auf dem oberen schrägen Abschnitt (33A) des Schenkels (33) angeordnet ist.

6. Vorrichtung nach Anspruch 5, **dadurch gekennzeichnet, dass** der erste zerbrechliche Schwächungsbereich (36) in der Höhe zwischen dem unteren Ende des ersten Regelmoduls (10) und dem oberen Ende des Stoßfängerträgers (2) angeordnet ist.

7. Vorrichtung nach einem der Ansprüche 5 oder 6, **dadurch gekennzeichnet, dass** die Stange (30) eine zweite so genannte zerbrechliche Schwächungszone (37) aufweist, die auf dem unteren vertikalen Abschnitt (33B) des Unterschenkels (33) angeordnet ist.

8. Vorrichtung nach Anspruch 7, **dadurch gekennzeichnet, dass** der zweite zerbrechliche Schwächungsbereich (37) in der Höhe zwischen dem oberen Ende des zweiten Regelmoduls (20) und dem unteren Ende des Stoßfängerträgers (2) angeordnet ist.

9. Vorrichtung nach einem der Ansprüche 1 bis 8, **dadurch gekennzeichnet, dass** die Verbindungsstange (30) einstückig aus einem thermoplastischen Material geformt ist.

10. Kraftfahrzeug mit einem vorderen Stoßfängerbalken (2), mindestens einem Wärmetauscher (3, 4, 5) und einer zwischen dem vorderen Stoßfängerbalken (2) und dem mindestens einen Wärmetauscher (3, 4, 5) angeordneten steuerbaren Steuervorrichtung für den Kühleingangsluftstrom (1); **dadurch gekennzeichnet, dass** die steuerbare Steuervorrichtung für den Kühleingangsluftstrom (1) einem der Ansprüche 1 bis 9 entspricht.

## Claims

1. Device for controlled regulation of the incoming cooling air flow (1) for a motor vehicle, intended to be interposed between the front bumper beam (2) and at least one heat exchanger (3, 4, 5) of said vehicle, said device (1) comprising a first and a second regulation module (10, 20) designed to be arranged respectively above and below said beam (2) facing the high and low air inlets of the vehicle, each said module (10, 20) comprising a support rack (11, 21) delimiting two lateral compartments (11) A, 11B, 21A, 21B) separated by a central compartment (11C, 21C), a plurality of flaps (12, 13, 22, 23) arranged in said lateral compartments (11A, 11B, 21A, 21B) and mounted to pivot about parallel transverse axes between a closed position and an open position, and a control mechanism (14, 24) installed at said central compartment (11C, 21C) and articulated to said flaps (11C) 12, 13, 22, 23), said device (1) also comprising a connecting rod (30) connecting the control mechanisms (14, 24) of said modules (10, 20) as well as an actuator (40) housed in said central box (11C) of said module (11), said actuator (40) being able to cause the pivoting of all the flaps (12, 13, 22, 23) of said modules (10, 20) via said control mechanisms (10) 4, 24) and said connecting rod (30);
**characterized in that** said connecting rod (30) has at least one frangible weakening zone of lower strength (36, 37) configured to break under a predetermined longitudinal shear stress.

2. Device according to claim 1, **characterized in that** each at least said frangible weakening zone is in the form of a transverse constriction line (36, 37) consisting of a thinning groove produced on the front face of said connecting rod (30).

3. Device according to either of claims 1 and 2, **characterized in that** the said connecting rod (30) comprises a head (31) articulated to the control mechanism (14) of the first regulation module (10), a foot (32) articulated to the control mechanism (24) of the second regulation module (20), and a leg (33) extending vertically between the said head (31) and the said foot (32).

4. Device according to claim 3, **characterized in that** the said leg (33) comprises an upper section (33A) extending obliquely downwards and rearwards from the said head (31), and a lower section (33B) extending vertically downwards in the extension of the said upper section (33A) as far as the said foot (32).

5. Device according to claim 4, **characterized in that** the said bead wire (30) comprises a first said frangible weakening zone (36) arranged on the said upper slanting section (33A) of the leg (33).

6. Device according to claim 5, **characterized in that** the said first said frangible weakening zone (36) is situated vertically between the lower end of the said first regulating module (10) and the upper end of the said bumper beam (2).

7. Device according to either of claims 5 and 6, **characterized in that** the said bead wire (30) comprises a second said frangible weakening zone (37) arranged on the said lower vertical section (33B) of the leg (33).

8. Device according to claim 7, **characterized in that** the said second said frangible weakening zone (37) is situated vertically between the upper end of the said second regulating module (20) and the lower end of the said bumper beam (2).

9. Device according to one of claims 1 to 8, **characterized in that** the said connecting rod (30) is integrally molded from a thermoplastic material.

10. Motor vehicle comprising a front bumper beam (2), at least one heat exchanger (3, 4, 5), and a device for controlled regulation of the incoming cooling air flow (1) inserted between said front bumper beam (2) and said at least one heat exchanger (3, 4, 5); **characterized in that** said device for controlled regulation of the incoming cooling air flow (1) is in accordance with one of claims 1 to 9.
